# EUROPÄISCHE PATENTSCHRIFT

(11) **EP 3 267 625 B1**
(45) Veröffentlichungstag und Bekanntmachung des Hinweises auf die Patenterteilung: **14.11.2018**
(21) Anmeldenummer: 17179531.3
(22) Anmeldetag: 04.07.2017
(51) Int. Cl.: H04L 12/26, H04L 29/06

(54) **VERFAHREN ZUR DETEKTION VON ANOMALEN ZUSTÄNDEN IN EINEM COMPUTERNETZWERK**
METHOD FOR DETECTION OF ABNORMAL CONDITIONS IN A COMPUTER NETWORK
PROCÉDÉ DE DÉTECTION D'ÉTATS ANORMAUX DANS UN RÉSEAU INFORMATIQUE

(30) Priorität: 07.07.2016 AT 506012016
(43) Veröffentlichungstag der Anmeldung: 10.01.2018
(73) Patentinhaber: AIT Austrian Institute of Technology GmbH, 1220 Wien (AT)
(72) Erfinder: Skopik, Florian, 2000 Stockerau (AT); Fiedler, Roman, 8020 Graz (AT); Wurzenberger, Markus, 1100 Wien (AT)
(74) Vertreter: Wildhack & Jellinek

(56) Entgegenhaltungen:
- EP-A1- 2 800 307
- US-A1- 2007 300 300
- DILEEPA JAYATHILAKE: "Towards structured log analysis", COMPUTER SCIENCE AND SOFTWARE ENGINEERING (JCSSE), 2012 INTERNATIONAL JOINT CONFERENCE ON, IEEE, 30. Mai 2012 (2012-05-30), Seiten 259-264, XP032219761, DOI: 10.1109/JCSSE.2012.6261962 ISBN: 978-1-4673-1920-1

## Beschreibung

Die Erfindung betrifft ein Verfahren zur Detektion von anomalen Zuständen in einem Computernetzwerk gemäß den Patentansprüchen 1 und 2.

Aus dem Stand der Technik ist bekannt, Protokolldateien, die von unterschiedlichen Prozessen erstellt werden, daraufhin zu untersuchen, ob die in den Protokolldateien beschriebenen Vorgänge einen anomalen Zustand der Prozesse bzw. des Computernetzwerks darstellen, in dem diese Prozesse ablaufen.

Bei den vorstehend genannten Verfahren bestehen wesentliche Probleme, die üblicherweise in für Menschen lesbarer Form geschriebenen Protokolldateien auf bestimmte Muster hin zu analysieren, um somit Betriebszustände zu erkennen, die ungewöhnlich oder einzigartig sind und auf anomale Betriebszustände hindeuten. Aus dem Stand der Technik sind konkret einzelne Verfahren bekannt, die unterschiedliche untereinander zusammengehörige Zeilen aus Protokolldateien in Verbindung bringen und derart typische Muster detektieren. Insbesondere ist ein derartiges Vorgehen aus dem österreichischen Patent 514215 bekannt.

Das Dokument US2007/0300300 offenbart ein Verfahren zur Detektion von anomalen Zuständen (Intrusion Detection System IDS) bei dem mehrere Protokolle mehrerer Rechner zusammengeführt und analysiert werden. Die Detektion erfolgt mittels eines Markov-Models, das mit historischen Daten trainiert wird. Das Dokument EP2800307 offenbart ein Verfahren zur Detektion von anomalen Zuständen (Feststellung von Abweichungen von einem vorgegebenen Normalzustand) bei dem aus den Protokollen mehrerer Rechner (zufällig) Datensätze ausgewählt werden, die auf Abweichungen untersucht werden. Solche Vorgehensweisen ermöglichen grundsätzlich das Auffinden von anomalen Zuständen in einem Computernetzwerk, sind jedoch relativ komplex und erfordern es insbesondere mehrere mitunter weit auseinanderliegende Zeilen miteinander zu kombinieren, was insgesamt zu einem erhöhten Ressourcenbedarf der Protokolldatenanalyse führt.

Die vorliegende Erfindung setzt sich zur Aufgabe ein Verfahren zur Detektion von anomalen Zuständen in einem Computernetzwerk bereitzustellen, das rasch und einfach kritische oder anomale Zustände in dem Computernetzwerk oder im Ablauf einzelner in dem Computernetzwerk ausgeführter Prozesse auffindet. Die Erfindung löst diese Aufgabe mit den in den Ansprüchen 1 und 2 dargestellten erfindungsgemäßen Verfahren.

Erfindungsgemäß wird das beschriebene Verfahren zur Detektion von anomalen Zuständen in Computernetzwerken, welche mehrere Computer umfassen, eingesetzt,
a) wobei von den Computern des Computernetzwerks oder von auf diesen Computern ablaufenden Prozessen jeweils Protokolle erstellt werden,
b) wobei von den Computern oder den Prozessen bei Auftreten vorgegebener Ereignisse für jedes dieser Ereignisse ein Protokolldatensatz in Form einer Protokollzeile erstellt wird, bestehend aus einem Zeitstempel sowie einem Beschreibungsdatensatz des jeweiligen protokollierten Ereignisses,
c) wobei die von den Computern oder Prozessen erstellten Protokollzeilen in einer dem Computer oder Prozess zugehörigen Protokolldatei gespeichert werden,
d) wobei die Protokollzeilen aus den einzelnen Protokolldateien homogenisiert werden, indem sie in einem einheitlichen Format, insbesondere mit einem einheitlichen Zeitstempelformat zeilenweise und basierend auf dem Zeitstempel zeitlich geordnet, in eine zentrale Protokolldatei geschrieben werden,
e) wobei eine recodierte Protokolldatei der zentralen Protokolldatei erstellt wird, indem zeilenweise aufeinander folgende Zeichen oder Zeichenketten der zentralen Protokolldatei aufgrund derselben vorgegebenen, insbesondere verlustbehafteten, Codierungsvorschrift in aufeinander folgende Zeichen oder Zeichenketten der recodierten Protokolldatei übergeführt werden,
f) wobei insbesondere im Rahmen der Recodierung die Reihenfolge der in den einzelnen Zeichen innerhalb des Beschreibungsdatensatzes der einzelnen Protokollzeilen enthaltenen Informationen erhalten bleiben, vorzugsweise die Anzahl der zur Beschreibung des Inhaltes verwendeten Symbole verringert wird,
g) wobei die einzelnen Zeilen der recodierten Protokolldatei hinsichtlich ihrer Ähnlichkeit analysiert werden und aufgrund ihrer Ähnlichkeit zu Gruppen zusammengefasst werden,
h) wobei nach Gruppen mit einer geringen Anzahl von Zeilen, insbesondere mit nur einer einzigen Zeile, gesucht wird, und
i) falls solche Zeilen vorhanden sind, ein anomaler Zustand im Computernetzwerk identifiziert wird,
angewendet.

Die Erfindung löst die Aufgabe ebenfalls mit einem Verfahren zur Detektion von anomalen Zuständen, insbesondere verursacht durch Manipulation, in einem Computernetzwerk, welches mehrere Computer umfasst,
a) wobei von den Computern des Computernetzwerks oder von auf diesen Computern ablaufenden Prozessen jeweils Protokolle erstellt werden,
b) wobei von den Computern oder den Prozessen bei Auftreten vorgegebener Ereignisse für jedes dieser Ereignisse ein Protokolldatensatz in Form einer Protokollzeile erstellt wird, bestehend aus einem Zeitstempel sowie einem Beschreibungsdatensatz des jeweiligen protokollierten Ereignisses
c) wobei die von den Computern oder Prozessen erstellten Protokollzeilen in einer dem Computer oder Prozess zugehörigen Protokolldatei gespeichert werden,
d) wobei die Protokollzeilen aus den einzelnen Protokolldateien homogenisiert werden, indem sie in einem einheitlichen Format, insbesondere mit einem einheitlichen Zeitstempelformat zeilenweise und basierend auf dem Zeitstempel zeitlich geordnet, in eine zentrale Protokolldatei geschrieben werden,
e) wobei für unterschiedliche vorgegebene, insbesondere gleich lange Zeitbereiche, basierend auf den Zeitstempeln verschiedene zentrale Protokolldateien erstellt werden,
f) wobei für jede zentrale Protokolldatei jeweils eine recodierte Protokolldatei erstellt wird, indem zeilenweise aufeinander folgende Zeichen oder Zeichenketten der zentralen Protokolldatei aufgrund derselben vorgegebenen, insbesondere verlustbehafteten, Codierungsvorschrift in aufeinander folgende Zeichen oder Zeichenketten der recodierten Protokolldateien übergeführt werden,
g) wobei insbesondere im Rahmen der Recodierung die Reihenfolge der in den einzelnen Zeichen innerhalb der einzelnen Protokollzeile enthaltenen Informationen erhalten bleiben, vorzugsweise die Anzahl der zur Beschreibung des Inhaltes verwendeten Symbole verringert wird,
h) wobei die einzelnen Zeilen der recodierten Protokolldateien, insbesondere separat, hinsichtlich ihrer Ähnlichkeit analysiert werden und aufgrund ihrer Ähnlichkeit zu Gruppen zusammengefasst werden,
i) wobei für die einzelnen Gruppen einer recodierten Protokolldatei jeweils eine Gruppe der zeitlich vorangegangenen recodierten Protokolldatei ermittelt wird, die ähnliche Zeilen enthält und die Gruppen einander derart zugeordnet werden,
j) wobei anschließend die einander zugeordneten Gruppen zweier zeitlich aufeinanderfolgender recodierter Protokolldateien miteinander verglichen werden, und
k) dass ein anomaler Zustand festgestellt wird,
   - wenn einzelne Gruppen nur für eine der Protokolldateien auftreten, oder
   - wenn die Differenz der Anzahl der in einander zugeordneten Gruppen enthaltenen Zeilen einen vorgegebenen Schwellenwert übersteigt.

Mit beiden Verfahren ist es auf einfache Weise möglich, anomale Ereignisse oder Zustände im jeweiligen Netzwerk festzustellen.

Dieses konkrete Vorgehen ermöglicht es, einzelne Protokollzeilen aufzufinden, die verglichen mit den übrigen Protokollzeilen nur selten auftreten, und daher einen anomalen Zustand im Computernetzwerk darstellen.

Dies ist durch die zwei erfindungsgemäßen Schritte gewährleistet, nämlich einerseits die Erstellung einer recodierten Protokolldatei, bei der die einzelnen von den Prozessen erstellten Protokollzeilen nach einer vorgegebenen Vorschrift umgewandelt werden und andererseits einem Gruppierungs-Verfahren, bei dem die umgewandelten Protokollzeilen entsprechend ihrem Aufbau zu Gruppen zusammengefasst werden.

In diesem erfindungsgemäßen Verfahren können einzelne Zeilen, die nicht den üblichen Mustern entsprechen, einfach aufgefunden werden und auf diese Weise können anomale Zustände festgestellt werden. Alternativ bietet die Erfindung auch die Möglichkeit, einzelne Protokolldateien für unterschiedliche Zeitabschnitte zu erstellen und für jede Protokolldatei separat eine recodierte Protokolldatei zu erstellen und diese recodierte Protokolldatei separat mit einem Gruppierungs-Verfahren zu untersuchen. Die Untersuchung ist in diesem Fall auf die Abänderung der Gruppe gerichtet.

Eine bevorzugte Ausführungsform der Erfindung ermöglicht nach der Durchführung einer erstmaligen Gruppierung eine Echtzeitanalyse der einzelnen aufgenommenen Protokollzeilen und eine rasche Erkennung anomaler Zustände im Echtzeitbetrieb.

Dabei ist vorgesehen, dass nach der Gruppierung der Protokollzeilen basierend auf einer vorgegebenen zentralen Protokolldatei während des laufenden Betriebs des Computernetzwerkes neue Protokollzeilen von den Computern oder Prozessen erhalten werden,
- wobei für jede der so erhaltenen Protokollzeilen jeweils aufeinanderfolgende Zeichen oder Zeichenketten der Protokolldatei aufgrund der verwendeten Codierungsvorschrift in aufeinanderfolgende Zeichen oder Zeichenketten einer recodierten Protokollzeile transformiert werden,
- wobei untersucht wird, ob die recodierte Protokollzeile einer der bereits erstellten Gruppen zugeordnet werden kann, und
- falls dies nicht der Fall ist, ein anomaler Zustand festgestellt wird.

Eine besonders einfache Durchführung des Gruppierungs-Verfahrens wird dann ermöglicht, wenn das Gruppierungs-Verfahren auf Sequenzalignments basiert, wobei zur Bestimmung, wie ähnlich oder unähnlich zwei recodierte Protokollzeilen der recodierten Protokolldatei sind, das Sequenzalignment dieser recodierten Protokollzeilen berechnet wird, wobei zur zahlenmäßigen Festlegung der Ähnlichkeit der Levenshtein-Abstand der beiden betrachteten recodierten Protokollzeilen, insbesondere basierend auf deren Sequenzalignment, berechnet wird und anschließend durch die Länge des Sequenzalignments normiert wird und derart die Ähnlichkeitsmaßwerte der recodierten Protokollzeilen, vorzugsweise auf einer Skala von 0 bis 1 liegen, wobei insbesondere zwei recodierte Protokollzeilen dann als ähnlich angesehen werden, wenn der Ähnlichkeitsmaßwert der beiden recodierten Protokollzeilen einen vorgegebenen Schwellenwert überschreitet.

Um Datenschutzansprüchen zu genügen, sieht das Verfahren vor, dass während der Recodierung der Protokollzeilen einzelne Teilzeichenketten der Protokollzeilen, welche auf den betreffenden Computer oder den Benutzer des Computers bezogene Informationen, insbesondere IP-Adressen und Usernamen enthalten, nach vorgegebenen Kriterien ausgewählt und in anonymisierter und pseudonymisierter Form in die recodierte Protokolldatei geschrieben werden, während die übrigen Teilzeichenketten unverändert basierend auf der Codierungsvorschrift in die recodierte Protokolldatei geschrieben werden.

Eine vorteilhafte Vorauswahl relevanter Informationen, die eine Anomalieerkennung vereinfachen, sieht vor, dass die Codierungsvorschrift derart gewählt wird, dass bestimmte Teilzeichenketten, die vorgegebenen Kriterien genügen, insbesondere mit einer einen Schwellenwert unterschreitenden Häufigkeit auftreten, aufgrund der Codierungsvorschrift ohne Informationsverlust transformiert werden, während die übrigen Textteile verlustbehaftet transformiert werden.

Eine weitere Datenreduktion sieht vor, dass Zeichenketten oder Teilzeichenketten, die mit einer einen Schwellenwert überschreitenden Häufigkeit in den Protokolldateien auftreten, identifiziert werden und von der Codierungsvorschrift verworfen oder verlustbehaftet transformiert werden, während die übrigen Textteile nicht verlustbehaftet transformiert werden.

Eine vorteilhafte Recodierung von Protokollzeilen sieht vor, dass nur die Beschreibungsdatensätze der einzelnen Protokollzeilen recodiert werden, wobei jede recodierte Protokollzeile erstellt wird, indem jede Protokollzeile mit einer Nummer indiziert wird, die unter anderem den Zeitstempel enthält und insbesondere die eindeutige Rückumwandlung in die Protokollzeile ermöglicht, aus der die recodierte Protokollzeile erstellt wurde, wobei nur der recodierte Beschreibungsdatensatz einer recodierten Protokollzeile zur Gruppierung genutzt wird.

Eine vorteilhafte Datenreduktion sieht vor, dass die Codierungsvorschrift derart gewählt wird, dass einzelne Zeichen oder Zeichenketten, die insbesondere durch im Klartext lesbare, vorzugsweise 96, Zeichen beschrieben werden, jeweils in ein Zeichen eines Zielalphabets transformiert werden, vorzugsweise mit Ausnahme der in Ansprüchen 6 und 7 erwähnten Teilzeichenketten, wobei vorzugsweise das Zielalphabet nicht mehr als 20 verschiedene Symbole und/oder weniger als 1/4 der in der zentralen Protokolldatei auftretenden unterschiedlichen Symbole aufweist und damit insbesondere eine Datenreduktion bedeutet, die zu einer Beschleunigung des Gruppierungs-Verfahrens führt.

Sofern eine Reduktion auf insgesamt 20 Symbole in einem Zielalphabet vorgenommen wird, können generell aus der Bioinformatik entwickelte Gruppierungs-Algorithmen, die regelmäßig 20 Eingangssymbole vorsehen, die den einzelnen kanonischen Aminosäuren entsprechen, wirksam eingesetzt werden.

Eine vorteilhafte Kennzeichnung bzw. Auszeichnung von Protokolldateien, bei denen anomale Zustände auftreten, sieht vor, dass jeder der Zeilen der Protokolldatei die jeweilige recodierte Zeile der recodierten Protokolldatei zugeordnet wird, die durch Anwendung der Codierungsvorschrift auf die jeweilige Zeile der Protokolldatei erstellt wurde, und dass diejenigen recodierten Zeilen der recodierten Protokolldatei identifiziert werden,
- die in Gruppen mit nur einer recodierten Zeile oder einer geringen Anzahl von recodierten Zeilen enthalten sind, und/oder
- die in Gruppen enthalten sind, denen keine Gruppe der vorangegangenen recodierten Protokolldatei zugeordnet werden konnte, und/oder
- die in Gruppen enthalten sind, bei denen die (Betrags-)Differenz der Anzahl der in der jeweiligen Gruppe enthaltenen recodierten Zeilen zur Anzahl der in einer zugeordneten Gruppe enthaltenen recodierten Zeilen einen vorgegebenen Schwellenwert übersteigt,
und dass die so identifizierten Zeilen der Protokolldatei oder der zentralen Protokolldatei als Indikator eines anomalen Zustands markiert werden, denen die derart identifizierten recodierten Zeilen der recodierten Protokolldatei zugewiesen wurden.

Dies ermöglicht eine einfache Überprüfung des anomalen Zustands bzw. eine einfache Fehlerbehandlung.

Eine bevorzugte Ausführungsform der Erfindung wird anhand der folgenden Zeichnungsfiguren näher dargestellt.

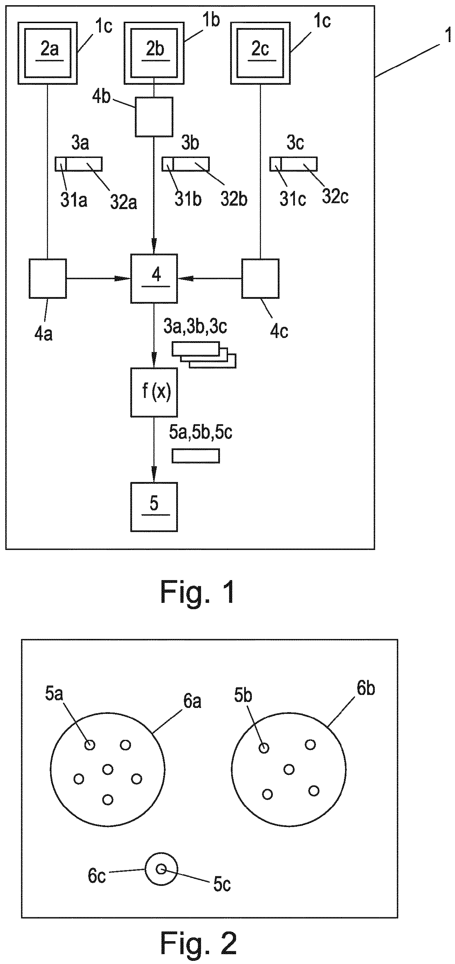

In **Fig. 1** ist ein Computernetzwerk 1, bestehend aus Computern 1a, 1b, 1c, dargestellt, in dem mehrere Prozesse 2a, 2b, 2c ablaufen. Die Prozesse 2a, 2b, 2c erstellen zu unterschiedlichen Zeitpunkten Protokollmeldungen in Form von Protokollzeilen 3a, 3b, 3c, die in jeweils einer Protokolldatei 4a, 4b, 4c abgespeichert werden. Die einzelnen Protokollzeilen 3a, 3b, 3c werden üblicherweise in der Reihenfolge ihres Einlangens in die Protokolldateien 4a, 4b, 4c geschrieben.

Die Protokollzeilen 3a, 3b, 3c aus den einzelnen Protokolldateien bestehend aus einem Zeitstempel 31a, 31b, 31c und einem Beschreibungsdatensatz 32a, 32b, 32c, werden homogenisiert. Dabei werden die Protokollzeilen 3a, 3b, 3c in ein einheitliches Format konvertiert. Bei der Homogenisierung werden die Zeitstempel 31a, 31b, 31c von Protokollzeilen 3a, 3b, 3c aus verschiedenen Quellen in ein einheitliches Format konvertiert. Dabei wird unter anderem das Format der Zeitstempel 31a, 31b, 31c vereinheitlicht, um den Vergleich dieser zu ermöglichen. Die einzelnen Protokollzeilen 3a, 3b, 3c der Protokolldateien 4a, 4b, 4c werden zu einer einzelnen zentralen Protokolldatei 4 zusammengefügt, wobei die einzelnen Protokollzeilen 3a, 3b, 3c nach der in den Zeitstempeln 31a, 31b, 31c codierten Zeit sortiert werden.

Eine erste Ausführungsform der Erfindung operiert lediglich auf einer einzigen zentralen Protokolldatei 4, in der die einzelnen Protokollzeilen 3a, 3b, 3c, die während eines vorgegebenen Zeitraums aufgenommen wurden, abgespeichert sind. Aus der zentralen Protokolldatei 4 wird gemäß der im Folgenden dargestellten Vorgehensweise eine recodierte Protokolldatei 5 erstellt.

Im Folgenden wird die Erstellung einer recodierten Protokolldatei 5 basierend auf einer Codierungsvorschrift f(x) dargestellt. Bei der Erstellung der recodierten Protokolldatei 5 aufgrund einer zentralen Protokolldatei 4 wird die zentrale Protokolldatei 4 in ihre einzelnen Protokollzeilen 3a, 3b, 3c zerlegt, die jeweils separat in die Zeilen 5a, 5b, 5c der recodierten Protokolldatei 5 transformiert werden. Dabei wird immer nur der Beschreibungsdatensatz 32a, 32b, 32c der Protokollzeilen 3a, 3b, 3c recodiert.

Die Recodierung der zentralen Protokolldatei 4 erfolgt dabei zeilenweise, wobei die recodierte Protokolldatei 5 aus der zentralen Protokolldatei 4 erstellt wird. Aufeinanderfolgende Zeilen oder Zeichenketten der zentralen Protokolldatei 4 werden aufgrund der Codierungsvorschrift f(x) in aufeinanderfolgende Zeichen oder Zeichenketten der recodierten Protokolldatei 5 übergeführt oder transformiert. Dabei bleibt die innere Struktur der Zeilen erhalten, sodass sich aus jeder Zeile 3a, 3b, 3c einer Protokolldatei jeweils eine recodierte Zeile 5a, 5b, 5c der recodierten Protokolldatei 5 ergibt. Dabei wird immer nur der Beschreibungsdatensatz 32a, 32b, 32c der Protokollzeilen 3a, 3b, 3c recodiert.

In der im Folgenden dargestellten Ausführungsform der Erfindung wird jedes einzelne Zeichen einer Protokollzeile 3a, 3b, 3c der zentralen Protokolldatei 4 in ein Zeichen einer Protokollzeile 5a, 5b, 5c der recodierten Protokolldatei 5 konvertiert. Im vorliegenden Ausführungsbeispiel umfasst das Ausgangsalphabet der zentralen Protokolldatei 4 eine Anzahl von 256 Zeichen, wobei jedes Zeichen einer Zahl zwischen 0 und 255 im ASCII-Code entspricht. Diese dem Zeichen zugeordnete Zahl wird gemäß der im vorliegenden Ausführungsbeispiel verwendeten Codierungsvorschrift entsprechend der Formel y = f(x) = x mod 20 in eine Zahl zwischen 0 und 19 umgewandelt, um die Anwendung des weiteren Verfahrens zu beschleunigen und auch um eine höhere Datenreduktion zu erzielen.

In einem weiteren Schritt werden die einzelnen Zeilen 5a, 5b, 5c der recodierten Protokolldatei 5 auf ihre Ähnlichkeit analysiert, um (**Fig. 2**) aufgrund ihrer Ähnlichkeit zu Gruppen 6a, 6b, 6c zusammengefasst zu werden. Die im Rahmen der Erfindung verwendeten Gruppierungs-Verfahren beruhen vorzugsweise auf der Anwendung einer Distanzfunktion, die die Ähnlichkeit zwischen zwei Zeilen 5a, 5b, 5c der recodierten Protokolldatei 5 angibt. Bei einer vorteilhaften Ausführungsform der Erfindung kann als Distanzfunktion der Levenshtein-Abstand zweier Zeichenketten gewählt werden. Diese Distanzfunktion ist geeignet Zeichenketten, d.h. recodierte Protokollzeilen 5a, 5b, 5c, unterschiedlicher Länge miteinander zu vergleichen und ermöglicht derart eine einfache Quantifizierung der Unterschiedlichkeit oder Ähnlichkeit zweier Zeilen 5a, 5b, 5c der recodierten Protokolldatei 5.

Besonders bevorzugt basiert das Gruppierungs-Verfahren auf einem Sequenzalignment, wobei zur Bestimmung, wie ähnlich oder unähnlich zwei Zeilen 5a, 5b, 5c der recodierten Protokolldatei 5 sind, das Sequenzalignment dieser recodierten Protokollzeilen 5a, 5b, 5c berechnet wird. Zur zahlenmäßigen Festlegung der Ähnlichkeit wird der Levenshtein-Abstand der beiden betrachteten recodierten Protokollzeilen 5a, 5b, 5c basierend auf deren Sequenzalignment berechnet. Anschließend wird der so ermittelte Wert durch die Länge des Sequenzalignments normiert, wodurch ein Ähnlichkeitsmaßwert der recodierten Protokollzeilen 5a, 5b, 5c bestimmt wird, der aufgrund der Normierung Werte auf einer Skala von 0 bis 1 aufweist. Zwei recodierte Protokollzeilen werden dann als ähnlich angesehen und derselben Gruppe zugewiesen, wenn der Ähnlichkeitsmaßwert jeweils zweier recodierter Protokollzeilen 5a, 5b, 5c einen vorgegebenen Schwellenwert überschreitet. Je nachdem wie genau das gewünschte Ergebnis sein soll, kann der Schwellenwert höher oder niedriger gewählt werden.
Aus dem Stand der Technik ist eine Vielzahl von Gruppierungs-Verfahren bekannt, die auf der Anwendung einer Distanzfunktion beruhen und ein Zusammenfassen einzelner Zeilen zu Gruppen 6a, 6b, 6c oder Gruppen von untereinander ähnlichen Zeilen ermöglichen. Solche Gruppierungs-Verfahren sind beispielsweise CLIQUE (Agrawal, R., Gehrke, J., Gunopulos, D., & Raghavan, P. (1998). Automatic subspace clustering of high dimensional data for data mining applications (Vol. 27, No. 2, pp. 94-105). ACM.), MAFIA (Goil, S., Nagesh, H., & Choudhary, A. (1999, June). MAFIA: Efficient and scalable subspace clustering for very large data sets. In Proceedings of the 5th ACM SIGKDD International Conference on Knowledge Discovery and Data Mining (pp. 443-452). ACM.), CACTUS (Ganti, V., Gehrke, J., & Ramakrishnan, R. (1999, August). CACTUS-clustering categorical data using summaries. In Proceedings of the fifth ACM SIGKDD international conference on Knowledge discovery and data mining (pp. 73-83). ACM.), PROCULUS (Aggarwal, C. C., Wolf, J. L., Yu, P. S., Procopiuc, C., & Park, J. S. (1999, June). Fast algorithms for projected clustering. In ACM SIGMoD Record (Vol. 28, No. 2, pp. 61-72). ACM.) und SLCT (Vaarandi, R. (2003, October). A data clustering algorithm for mining patterns from event logs. In Proceedings of the 2003 IEEE Workshop on IP Operations and Management (IPOM) (pp. 119-126)).

Als Ergebnis des Gruppierungs-Verfahrens erhält man eine Vielzahl von Gruppen 6a, 6b, 6c, die jeweils untereinander ähnliche oder gleiche Zeilen enthalten.

Unterscheiden sich einzelne von den recodierten Protokollzeilen 5c wesentlich von den übrigen Zeilen 5a, 5b der recodierten Protokolldatei 5, so ist der ermittelte Abstand bzw. die ermittelte Distanz zu den übrigen Zeilen sehr groß, sodass diese sich nicht in der gleichen Gruppe 6a, 6b mit den übrigen Zeilen befinden, sondern im Zuge des Gruppierungs-Verfahrens als Einzelgänger oder Outlier detektiert werden. Gruppen 6c, die lediglich eine einzelne Zeile 5c oder nur sehr wenige Zeilen enthalten, können auf das Vorliegen kritischer oder anomaler Zustände hindeuten, da sie keinem Ereignis entsprechen, das regelmäßig im Netzwerk bzw. bei den einzelnen Prozessen auftritt.

Zur weiteren Reduktion der zu analysierenden Daten besteht die Möglichkeit einzelne Protokollzeilen 3a, 3b, 3c nicht in die recodierte Protokolldatei 5 zu übernehmen und nicht dem Gruppierungs-Verfahren zu Grunde zu legen. Hierfür können unterschiedliche Kriterien vorgegeben werden, denen einzelne Protokollzeilen 3a, 3b, 3c entsprechen müssen, um von der Recodierung bzw. vom Gruppierungs-Verfahren ausgeschlossen zu werden. Ein solches Kriterium kann beispielsweise dadurch festgelegt werden, dass Protokollzeilen 3a, 3b, 3c von der weiteren Verarbeitung ausgeschlossen werden, die bestimmte Teilzeichenketten enthalten oder die ein bestimmtes Muster enthalten. Solche Teilzeichenketten oder Muster können beispielsweise in Form von Regular Expressions festgelegt werden.

Darüber hinaus besteht auch die Möglichkeit, dass einzelne Zeilen 3a, 3b, 3c zwar der Recodierung bzw. dem Gruppierungs-Verfahren zu Grunde gelegt werden, einzelne Teilzeichenketten von 3a, 3b, 3c jedoch entweder überhaupt gelöscht werden oder unter Informationsverlust recodiert werden. Dies bedeutet, dass der konkrete Inhalt der Zeile 3a, 3b, 3c nicht mehr aus der Zeile 5a, 5b, 5c der recodierten Protokolldatei 5 rücktransformiert werden kann. Anteile von Zeilen, die bestimmten Kriterien genügen, beispielsweise Zahlenwerte, können ohne Informationsverlust transformiert werden.

In einem bevorzugten Ausführungsbeispiel kann eine Codierungsvorschrift so gewählt werden, dass bestimmte einzelne Zeichenketten die vorgegebenen Kriterien genügen und selten auftreten, ohne Informationsverlust transformiert werden während die übrigen Textteile verlustbehaftet transformiert werden. Dies hat den Vorteil, dass einzelne immer wiederkehrende Textteile, die nur geringen Informationsgehalt haben, nur wenige Ressourcen im Rahmen des Ähnlichkeitsvergleichs benötigen.

Darüber hinaus besteht auch die Möglichkeit, dass im Rahmen der Recodierung jede recodierte Protokollzeile 5a, 5b, 5c erstellt wird, indem die jeweilige Protokollzeile 3a, 3b, 3c, auf der sie basiert, mit einer Nummer indiziert wird, die unter anderem den Zeitstempel 31a, 31b, 31c enthält und insbesondere eine eindeutige Rückumwandlung in die Protokollzeile 3a, 3b, 3c ermöglicht, aus der die recodierte Protokollzeile 5a, 5b, 5c erstellt wurde. Nur der recodierte Beschreibungsdatensatz einer recodierten Protokollzeile 5a, 5b, 5c wird für die Gruppierung genutzt.

Eine weitere bevorzugte parallel oder alternativ anwendbare Möglichkeit der Ausgestaltung einer Recodierungsvorschrift besteht darin, dass einzelne Teilzeichenketten der Protokollzeilen 3a, 3b, 3c, welche auf den betreffenden Computern 1a, 1b, 1c oder den Benutzer des Computers 1a, 1b, 1c hinweisen, insbesondere IP-Adressen oder Usernamen, anonymisiert/pseudonymisiert in den recodierten Protokollzeilen abgespeichert werden. Während des Schritts der Recodierung der Protokollzeilen werden dabei die betreffenden Teilzeichenketten der Protokollzeilen, in denen sich die betreffenden personenbezogenen Informationen befinden, nach vorgegebenen Kriterien ausgewählt, insbesondere mittels einer Regular-Expression-Suche oder einem Datenbankvergleich, und in anonymisierter oder pseudonymisierter Form in die recodierte Protokolldatei 5 geschrieben. Die übrigen Teilzeichenketten können im Rahmen der Recodierung unverändert oder nach einer anderen Codierungsvorschrift verändert in die recodierte Protokolldatei 5 geschrieben werden.

Darüber hinaus kann im Rahmen der Codierungsvorschrift festgelegt werden, dass einzelne Zeichen oder Zeichenketten im Klartext durch 96 von einander unterscheidbare Zeichen eines Zeichensatzes beschrieben werden, in ein Zielalphabet transformiert werden, das 20 Buchstaben aufweist. Vorteilhafterweise entspricht die Zeichenanzahl des Zielalphabets weniger als einem 1/4 der Anzahl der Symbole des Alphabets, in denen die zentrale Protokolldatei 4 codiert ist. Allenfalls können einzelne Zeichenketten hiervon ausgenommen werden und entweder überhaupt verworfen werden oder andererseits ohne Informationsverlust transformiert werden. Dabei besteht insbesondere auch die Möglichkeit, ein Zeichen in einer Protokollzeile durch zwei Zeichen der recodierten Protokollzeile verlustfrei darzustellen.

So besteht beispielsweise die Möglichkeit häufig auftretende Zeichenketten der Protokollzeilen 3a, 3b, 3c, die beispielsweise auf die Art eines Prozesses 2a, 2b, 2c hinweisen und daher nur von geringer Bedeutung sind, mit wenigen Zeichen, was insbesondere eine Datenreduktion und Informationsverlust bedeutet, zu recodieren, während selten auftretende Zeichenketten der Protokollzeilen 3a, 3b, 3c, die beispielsweise auf Parameterwerte hinweisen und daher von größerer Bedeutung sind, ohne Informationsverlust recodiert werden.

Die vorstehend genannten Verfahren lassen sich auf einfache Weise nach der erstmaligen Durchführung eines Gruppierungs-Verfahrens in Echtzeit weiterführen. In diesem Fall werden von den einzelnen Prozessen 2a, 2b, 2c jeweils laufend neue Protokollzeilen 3a, 3b, 3c erstellt und entsprechend der bereits zuvor verwendeten Codierungsvorschrift f(x) in recodierte Protokollzeilen 5a, 5b, 5c umgewandelt. Dabei wird untersucht, ob die so erhaltene recodierte Protokollzeile einer bereits erstellten Gruppe 6 zugeordnet werden kann. Ist dies nicht der Fall, so wird ein anomaler Zustand festgestellt.

Die vorstehend genannten Verfahren lassen sich auf einfache Weise nach der erstmaligen Durchführung eines Gruppierungs-Verfahrens in Echtzeit weiterführen. In diesem Fall werden von den einzelnen Prozessen 2a, 2b, 2c jeweils laufend neue Protokollzeilen 3a, 3b, 3c erstellt und entsprechend der bereits zuvor verwendeten Codierungsvorschrift f(x) in recodierte Protokollzeilen 5a, 5b, 5c umgewandelt. Dabei wird erneut das Gruppierungs-Verfahren auf den vorgegeben Zeitbereich angewandt und anschließend werden wie zuvor die so erhaltenen Gruppen mit den Gruppen aus den vergangenen Zeitbereichen verglichen. Lässt sich eine Gruppe nicht einer Gruppe des vergangenen Zeitbereichs zuordnen, oder verändern sich diese zu stark in ihrer Größe, so wird ein anomaler Zustand festgestellt.

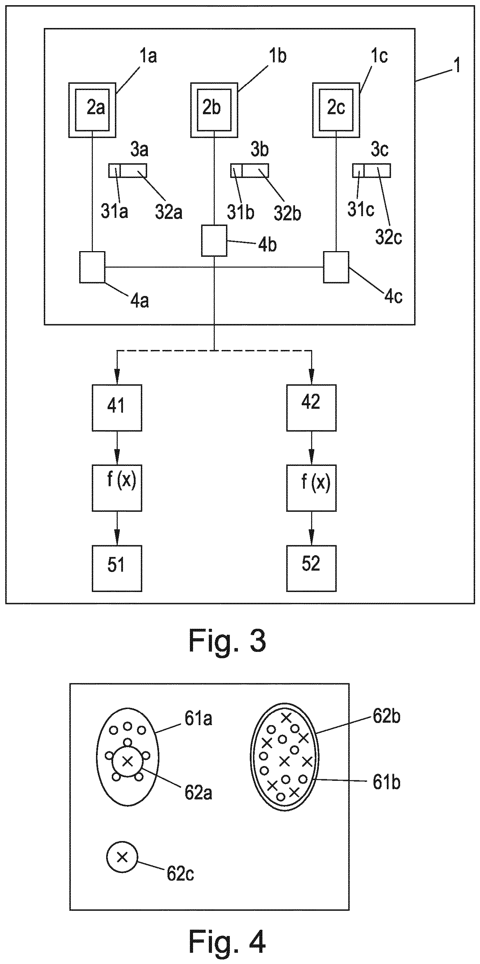

Bei einer weiteren bevorzugten Ausführungsform der Erfindung, dargestellt in **Fig. 3** werden für unterschiedliche, zumeist gleich lange, Zeiträume wie beim ersten Ausführungsbeispiel der Erfindung Gruppen erstellt (**Fig. 3**). So kann beispielsweise während eines ersten Tags eine erste zentrale Protokolldatei 41 erstellt werden, von dem eine erste recodierte Protokolldatei 51 abgeleitet wird, während eines zweiten Tags wird nach denselben Vorschriften eine zweite zentrale Protokolldatei 42 erstellt werden, die ebenfalls nach den gleichen Vorschriften in eine recodierte Protokolldatei 52 entsprechend derselben Codierungsvorschrift f(x) umgewandelt wird. Für jede einzelne der recodierten Protokolldateien 51, 52 wird jeweils separat ein Gruppierungs-Verfahren durchgeführt, wobei für jede zentrale Protokolldatei 41, 42 somit jeweils separat einzelne Gruppen 61a, 61b, 62a, 62b, 62c von Zeilen der recodierten Protokolldateien 51, 52 vorliegen.

Die einzelnen Gruppen 61a, 61b, 62a, 62b, 62c der einzelnen Protokolldateien können einander zugeordnet werden, beispielsweise indem für jede Gruppe 61a, 61b die aus der ersten recodierten Protokolldatei 51 erstellt wurde, jeweils eine der Gruppen 62a, 62b der zweiten recodierten Protokolldatei 52 zugeordnet wird, bei dem die Abstände der den jeweiligen Gruppen 61a, 61b, 62a, 62b zugeordneten Zeilen am geringsten sind. In weiterer Folge wird untersucht, ob sich die einzelnen Gruppen 61a, 62a bei den jeweiligen Protokolldateien wesentlich unterscheiden. Ist dies der Fall, beispielsweise wenn sich die Differenz der Anzahl der ineinander zugeordneten Gruppen enthaltenen Zeilen einen vorgegeben Schwellenwert übersteigt, wird ein anomaler Zustand festgestellt. Darüber hinaus kann ein anomaler Zustand auch dann festgestellt werden, wenn einzelne Gruppen 62c nur bei einer Protokolldatei jedoch nicht bei der anderen Protokolldatei auftreten.

Alternativ besteht auch die Möglichkeit, das Gruppierungs-Verfahren auf sämtliche von den Prozessen erstellten Protokollzeilen anzuwenden. In diesem Fall enthalten die Gruppen, Zeilen aus unterschiedlichen recodieren Protokolldateien, wobei diese Gruppen anschließend nach recodieren Protokolldateien unterteilt werden können. In diesem Fall ist eine nachträgliche Suche der Zuordnung der Gruppen nicht erforderlich.

Ergibt ein Vergleich der Gruppen, dass einzelne Gruppen nur aus Zeilen aus einzelnen Protokolldateien bestehen, während in dieser Gruppe enthaltene Zeilen in anderen recodierten Protokolldateien keine ähnlichen Zeilen zugewiesen werden können, so wird ein anomaler Zustand erkannt. Entsprechendes gilt auch dann, wenn die Anzahl der in den einander zugeordneten Gruppen enthaltenen Zeilen stark differiert, d.h. dass die Differenz der Anzahl der in den einzelnen einander zugeordneten Gruppen enthaltenen Zeilen einen vorgegebenen Schwellenwert übersteigt.

Das erfindungsgemäße Vorgehen ermöglicht auch ein einfaches Auffinden der einzelnen Zeilen 3a, 3b, 3c der Protokolldateien 3, in denen Zustände der Prozesse dokumentiert sind, die auf einen anomalen Zustand hindeuten. Um eine derartige Zuordnung zu ermöglichen, wird jeder der Zeilen 3a, 3b, 3c der Protokolldatei 3 die jeweilige Zeile 5a, 5b, 5c der recodierten Protokolldatei 5 zugeordnet, die aufgrund der Zeile 3a, 3b, 3c der Protokolldatei 3 sowie der Codierungsvorschrift f(x) erstellt wurde. Dies geschieht durch eine eindeutige Indizierung der Protokollzeilen, welche unter anderem den Zeitstempel 31a, 31b, 31c enthält. Jeder Zeile 3a, 3b, 3c der Protokolldatei 3 wird diejenige Zeile 5a, 5b, 5c der recodierten Protokolldatei 5 zugeordnet, die durch Anwendung der Codierungsvorschrift f(x) auf die jeweilige Zeile 3a, 3b, 3c der Protokolldatei 3 erstellt wurde. Anschließend wird nach denjenigen Zeilen 5a, 5b, 5c der recodierten Protokolldatei 5 gesucht, die in Gruppen 6 mit nur einer Zeile oder einer geringen Anzahl von Zeilen 5a, 5b, 5c enthalten sind. Alternativ kann auch nach den Zeilen 5a, 5b, 5c der recodierten Protokolldatei 5 gesucht werden, die in Gruppen 62c (**Fig. 4**) enthalten sind, denen keine Gruppe 61 der anderen Protokolldatei 61 zugeordnet werden konnte und/oder die in Gruppen 61a, 62a enthalten sind, bei denen die Betragsdifferenz der Anzahl der in der jeweiligen Gruppe 61a, 62a enthaltenen Zeilen zur Anzahl der in einer zugeordneten Gruppe 6 enthaltenen Zeilen einen vorgegebenen Schwellenwert übersteigt. Nachdem die Zeilen der recodierten Protokolldatei 5 identifiziert wurden, wird nach denjenigen Zeilen 3a, 3b, 3c der Protokolldatei 3, 31, 32 gesucht, denen die identifizierten Zeilen der recodierten Protokolldatei 5, 51, 52 zugewiesen wurden. Diese Zeilen 3a, 3b, 3c der Protokolldatei 3 werden als Indikator eines anomaler Zustands markiert und dem Benutzer angezeigt oder für die weitere Verarbeitung zur Verfügung gehalten. Alternativ kann auch nur nach den Protokollzeilen 3a, 3b, 3c, gesucht werden, die den recodierten Protokollzeilen 5a, 5b, 5c entsprechen, die einen potenziell anomalen Zustand beschreiben.

## Patentansprüche

1. Verfahren zur Detektion von anomalen Zuständen, insbesondere verursacht durch Manipulation, in einem Computernetzwerk (1), welches mehrere Computer (1a, 1b, 1c) umfasst,
a) wobei von den Computern (1a, 1b, 1c) des Computernetzwerks (1) oder von auf diesen Computern (1a, 1b, 1c) ablaufenden Prozessen (2a, 2b, 2c) jeweils Protokolle erstellt werden,
b) wobei von den Computern (1a, 1b, 1c) oder den Prozessen (2a, 2b, 2c) bei Auftreten vorgegebener Ereignisse für jedes dieser Ereignisse ein Protokolldatensatz in Form einer Protokollzeile (3a, 3b, 3c) erstellt wird, bestehend aus einem Zeitstempel (31a, 31b, 31c) sowie einem Beschreibungsdatensatz (32a, 32b, 32c) des jeweiligen protokollierten Ereignisses,
c) wobei die von den Computern (1a, 1b, 1c) oder Prozessen (2a, 2b, 2c) erstellten Protokollzeilen (3a, 3b, 3c) in einer dem Computer (1a, 1b, 1c) oder Prozess (2a, 2b, 2c) zugehörigen Protokolldatei (4a, 4b, 4c) gespeichert werden,
d) wobei die Protokollzeilen (3a, 3b, 3c) aus den einzelnen Protokolldateien (4a, 4b, 4c) homogenisiert werden, indem sie in einem einheitlichen Format, insbesondere mit einem einheitlichen Zeitstempelformat zeilenweise und basierend auf dem Zeitstempel (31a, 31b, 31c) zeitlich geordnet, in eine zentrale Protokolldatei (4) geschrieben werden,
e) wobei eine recodierte Protokolldatei (5) der zentralen Protokolldatei (4) erstellt wird, indem zeilenweise aufeinander folgende Zeichen oder Zeichenketten der zentralen Protokolldatei (4) aufgrund derselben vorgegebenen, insbesondere verlustbehafteten, Codierungsvorschrift (f) in aufeinander folgende Zeichen oder Zeichenketten der recodierten Protokolldatei (5) übergeführt werden,
f) wobei insbesondere im Rahmen der Recodierung die Reihenfolge der in den einzelnen Zeichen innerhalb des Beschreibungsdatensatzes der einzelnen Protokollzeilen (3a, 3b, 3c) enthaltenen Informationen erhalten bleiben, vorzugsweise die Anzahl der zur Beschreibung des Inhaltes verwendeten Symbole verringert wird,
g) wobei die einzelnen Zeilen (5a, 5b, 5c) der recodierten Protokolldatei (5) hinsichtlich ihrer Ähnlichkeit analysiert werden und aufgrund ihrer Ähnlichkeit zu Gruppen (6a, 6b, 6c) zusammengefasst werden,
h) wobei nach Gruppen (6a, 6b, 6c) mit einer geringen Anzahl von Zeilen (5a, 5b, 5c), insbesondere mit nur einer einzigen Zeile (5a, 5b, 5c), gesucht wird, und
i) falls solche Zeilen (5a, 5b, 5c) vorhanden sind, ein anomaler Zustand im Computernetzwerk (1) identifiziert wird.

2. Verfahren zur Detektion von anomalen Zuständen, insbesondere verursacht durch Manipulation, in einem Computernetzwerk (1), welches mehrere Computer (1a, 1b, 1c) umfasst,
a) wobei von den Computern (1a, 1b, 1c) des Computernetzwerks (1) oder von auf diesen Computern (1a, 1b, 1c) ablaufenden Prozessen (2a, 2b, 2c) jeweils Protokolle erstellt werden,
b) wobei von den Computern (1a, 1b, 1c) oder den Prozessen (2a, 2b, 2c) bei Auftreten vorgegebener Ereignisse für jedes dieser Ereignisse ein Protokolldatensatz in Form einer Protokollzeile (3a, 3b, 3c) erstellt wird, bestehend aus einem Zeitstempel (31a, 31b, 31c) sowie einem Beschreibungsdatensatzes (32a, 32b, 32c) des jeweiligen protokollierten Ereignisses
c) wobei die von den Computern (1a, 1b, 1c) oder Prozessen (2a, 2b, 2c) erstellten Protokollzeilen (3a, 3b, 3c) in einer dem Computer (1a, 1b, 1c) oder Prozess (2a, 2b, 2c) zugehörigen Protokolldatei (4a, 4b, 4c) gespeichert werden,
d) wobei die Protokollzeilen (3a, 3b, 3c) aus den einzelnen Protokolldateien (4a, 4b, 4c) homogenisiert werden, indem sie in einem einheitlichen Format, insbesondere mit einem einheitlichen Zeitstempelformat zeilenweise und basierend auf dem Zeitstempel (31a, 31b, 31c) zeitlich geordnet, in eine zentrale Protokolldatei (4) geschrieben werden,
e) wobei für unterschiedliche vorgegebene, insbesondere gleich lange Zeitbereiche basierend auf den Zeitstempeln (31a, 31b, 31c) verschiedene zentrale Protokolldateien (41, 42) erstellt werden,
f) wobei für jede zentrale Protokolldatei (41, 42) jeweils eine recodierte Protokolldatei (51, 52, 53) erstellt wird, indem zeilenweise aufeinander folgende Zeichen oder Zeichenketten der zentralen Protokolldatei (41, 42) aufgrund derselben vorgegebenen, insbesondere verlustbehafteten, Codierungsvorschrift (f) in aufeinander folgende Zeichen oder Zeichenketten der recodierten Protokolldateien (51, 52) übergeführt werden,
g) wobei insbesondere im Rahmen der Recodierung insbesondere die Reihenfolge der in den einzelnen Zeichen innerhalb der einzelnen Protokollzeile (3a, 3b, 3c) enthaltenen Informationen erhalten bleiben, vorzugsweise die Anzahl der zur Beschreibung des Inhaltes verwendeten Symbole verringert wird,
h) wobei die einzelnen Zeilen (5a, 5b, 5c) der recodierten Protokolldateien (51, 52), insbesondere separat, hinsichtlich ihrer Ähnlichkeit analysiert werden und aufgrund ihrer Ähnlichkeit zu Gruppen (61a, 61b, 62a, 62b, 62c) zusammengefasst werden,
i) wobei für die einzelnen Gruppen (61a, 61b, 62a, 62b, 62c) einer recodierten Protokolldatei (51, 52) jeweils eine Gruppe (61a, 61b, 62a, 62b, 62c) der zeitlich vorangegangenen recodierten Protokolldatei (51, 52) ermittelt wird, die ähnliche Zeilen enthält und die Gruppen (61a, 61b, 62a, 62b, 62c) einander derart zugeordnet werden,
j) wobei anschließend die einander zugeordneten Gruppen (61a, 61b, 62a, 62b, 62c) zweier zeitlich aufeinanderfolgender recodierter Protokolldateien (51, 52) miteinander verglichen werden, und
k) dass ein anomaler Zustand festgestellt wird,
- wenn einzelne Gruppen (61a, 61b, 62a, 62b, 62c) nur für eine der Protokolldateien auftreten, oder
- wenn die Differenz der Anzahl der in einander zugeordneten Gruppen (61a, 61b, 62a, 62b, 62c) enthaltenen Zeilen einen vorgegebenen Schwellenwert übersteigt.

3. Verfahren nach Anspruch 1 oder 2, **dadurch gekennzeichnet, dass** nach der Gruppierung der Protokollzeilen basierend auf einer vorgegebenen zentralen Protokolldatei (4; 41, 42) während des laufenden Betriebs des Computernetzwerkes neue Protokollzeilen (3a, 3b, 3c) von den Computern (1a, 1b, 1c) oder Prozessen (2a, 2b, 2c) erhalten werden,
- wobei für jede der so erhaltenen Protokollzeilen (3a, 3b, 3c) jeweils aufeinander folgende Zeichen oder Zeichenketten der Protokolldatei aufgrund der verwendeten Codierungsvorschrift in aufeinander folgende Zeichen oder Zeichenketten einer recodierten Protokollzeile (5a, 5b, 5c) transformiert werden,
- wobei untersucht wird, ob die recodierte Protokollzeile (5a, 5b, 5c) einer der bereits erstellten Gruppen (6a, 6b, 6c; 61a, 61b; 62a, 62b, 62c) zugeordnet werden kann, und
- falls dies nicht der Fall ist, ein anomaler Zustand festgestellt wird.

4. Verfahren nach einem der vorangehenden Ansprüche, **dadurch gekennzeichnet, dass** das Gruppierungs-Verfahren auf Sequenzalignment basiert, wobei zur Bestimmung, wie ähnlich oder unähnlich zwei recodierte Protokollzeilen (5a, 5b, 5c) der recodierten Protokolldateien (5; 51, 52) sind, das Sequenzalignment dieser recodierten Protokollzeilen berechnet wird, wobei zur zahlenmäßigen Festlegung der Ähnlichkeit der Levenshtein-Abstand der beiden betrachteten recodierten Protokollzeilen (5a, 5b, 5c), insbesondere basierend auf deren Sequenzalignment, berechnet wird und anschließend durch die Länge des Sequenzalignments normiert wird und derart die Ähnlichkeitsmaßwerte der recodierten Protokollzeilen (5a, 5b, 5c), vorzugsweise auf einer Skala von 0 bis 1 liegen, wobei insbesondere zwei recodierte Protokollzeilen (5a, 5b, 5c) dann als ähnlich angesehen werden, wenn der Ähnlichkeitsmaßwert der beiden recodierten Protokollzeilen (5a, 5b, 5c) einen vorgegebenen Schwellenwert überschreitet.

5. Verfahren nach einem der vorangehenden Ansprüche, **dadurch gekennzeichnet, dass** während der Recodierung der Protokollzeilen (3a, 3b, 3c) einzelne Teilzeichenketten der Protokollzeilen (3a, 3b, 3c), welche auf den betreffenden Computer (1a, 1b, 1c) oder den Benutzer des Computers (1a, 1b, 1c) bezogene Informationen, insbesondere IP-Adressen und Usernamen enthalten, nach vorgegebenen Kriterien ausgewählt und in anonymisierter und pseudonymisierter Form in die recodierte Protokolldatei (5; 51, 52) geschrieben werden, während die übrigen Teilzeichenketten unverändert basierend auf der Codierungsvorschrift in die recodierte Protokolldatei (5; 51, 52) geschrieben werden.

6. Verfahren nach einem der vorangehenden Ansprüche, **dadurch gekennzeichnet, dass** die Codierungsvorschrift (f) derart gewählt wird, dass bestimmte Teilzeichenketten, die vorgegebenen Kriterien genügen, insbesondere mit einer einen Schwellenwert unterschreitenden Häufigkeit auftreten, aufgrund der Codierungsvorschrift (f) ohne Informationsverlust transformiert werden, während die übrigen Textteile verlustbehaftet transformiert werden.

7. Verfahren nach einem der vorangehenden Ansprüche, **dadurch gekennzeichnet, dass** Zeichenketten oder Teilzeichenketten, die mit einer einen Schwellenwert überschreitenden Häufigkeit in den Protokolldateien (4a, 4b, 4c) auftreten, identifiziert werden und von der Codierungsvorschrift (f) verworfen oder verlustbehaftet transformiert werden, während die übrigen Textteile nicht verlustbehaftet transformiert werden.

8. Verfahren nach einem der vorangehenden Ansprüche, **dadurch gekennzeichnet, dass** nur die Beschreibungsdatensätze der einzelnen Protokollzeilen (3a, 3b, 3c) recodiert werden, wobei jede recodierte Protokollzeile (5a, 5b, 5c) erstellt wird, indem jede Protokollzeile (3a, 3b, 3c) mit einer Nummer indiziert wird, die unter anderem den Zeitstempel (31a, 31b, 31c) enthält und insbesondere die eindeutige Rückumwandlung in die Protokollzeile (3a, 3b, 3c) ermöglicht, aus der die recodierte Protokollzeile (5a, 5b, 5c) erstellt wurde, wobei nur der recodierte Beschreibungsdatensatz einer recodierten Protokollzeile (5a, 5b, 5c) zur Gruppierung genutzt wird.

9. Verfahren nach einem der vorangehenden Ansprüche, **dadurch gekennzeichnet, dass** die Codierungsvorschrift (f) derart gewählt wird, dass einzelne Zeichen oder Zeichenketten, die insbesondere durch im Klartext lesbare, vorzugsweise 96, Zeichen beschrieben werden, jeweils in ein Zeichen eines Zielalphabets transformiert werden, vorzugsweise mit Ausnahme der in Ansprüchen 6 und 7 erwähnten Teilzeichenketten, wobei vorzugsweise das Zielalphabet nicht mehr als 20 verschiedene Symbole und/oder weniger als 1/4 der in der zentralen Protokolldatei (4; 41, 42) auftretenden unterschiedlichen Symbole aufweist und damit insbesondere eine Datenreduktion bedeutet, die zu einer Beschleunigung des Gruppierungs-Verfahrens führt.

10. Verfahren nach einem der vorangehenden Ansprüche, **dadurch gekennzeichnet, dass** jeder der Zeilen (3a, 3b, 3c) der Protokolldatei (4a, 4b, 4c) die jeweilige recodierte Zeile (5a, 5b, 5c) der recodierten Protokolldatei (5; 51, 52) zugeordnet wird, die durch Anwendung der Codierungsvorschrift auf die jeweilige Zeile (3a, 3b, 3c) der Protokolldatei (4a, 4b, 4c) erstellt wurde, und dass diejenigen recodierten Zeilen (5a, 5b, 5c) der recodierten Protokolldatei (5; 51, 52) identifiziert werden,
- die in Gruppen (6a, 6b, 6c; 61a, 61b; 62a, 62b, 62c) mit nur einer recodierten Zeile (5a, 5b, 5c) oder einer geringen Anzahl von recodierten Zeilen (5a, 5b, 5c) enthalten sind, und/oder
- die in Gruppen (62c) enthalten sind, denen keine Gruppe (61a, 61b) der jeweils vorangegangenen recodierten Protokolldatei (51, 52) zugeordnet werden konnte, und/oder
- die in Gruppen (61a, 61b; 62a, 62b, 62c) enthalten sind, bei denen die (Betrags-)Differenz der Anzahl der in der jeweiligen Gruppe (61a, 61b; 62a, 62b, 62c) enthaltenen recodierten Zeilen (5a, 5b, 5c) zur Anzahl der in einer zugeordneten Gruppe (61a, 61b; 62a, 62b, 62c) enthaltenen recodierten Zeilen (5a, 5b, 5c) einen vorgegebenen Schwellenwert übersteigt,
und dass die so identifizierten Zeilen (3a, 3b, 3c) der Protokolldatei (4a, 4b, 4c) oder der zentralen Protokolldatei (4; 41, 42) als Indikator eines anomalen Zustands markiert werden, denen die derart identifizierten recodierten Zeilen (5a, 5b, 5c) der recodierten Protokolldatei (5; 51, 52) zugewiesen wurden.

11. Datenträger, auf dem ein Programm zur Durchführung eines Verfahrens nach einem der Ansprüche 1 bis 10 abgespeichert ist.

## Claims

1. A method for detection of abnormal conditions, in particular caused by manipulation, in a computer network (1) which comprises a plurality of computers (1a, 1b, 1c),
a) wherein protocols are created by the computers (1a, 1b, 1c) of the computer network (1) or by processes (2a, 2b, 2c) run on these computers (1a, 1b, 1c),
b) wherein, when predefined events occur, a protocol data record in the form of a protocol line (3a, 3b, 3c) is created by the computers (1a, 1b, 1c) or the processes (2a, 2b, 2c) for each of these events and consists of a timestamp (31a, 31b ,31c) and a description data record (32a, 32b, 32c) of the particular protocolled event,
c) wherein the protocol lines (3a, 3b, 3c) created by the computers (1a, 1b, 1c) or processes (2a, 2b, 2c) are stored in a protocol file (4a, 4b, 4c) associated with the computer (1a, 1b, 1c) or process (2a, 2b, 2c),
d) wherein the protocol lines (3a, 3b, 3c) from the individual protocol files (4a, 4b, 4c) are homogenised in that they are written into a central protocol file (4) in a uniform format, in particular in lines with a uniform timestamp format and chronologically ordered based on the timestamp (31a, 31b, 31c),
e) wherein a recoded protocol file (5) of the central protocol file (4) is created in that symbols or symbol chains of the central protocol file (4) following one another in lines are transferred into symbols or symbol chains of the recoded protocol file (5) following one another on account of the same, predefined, in particular lossy coding stipulation (f),
f) wherein in particular within the scope of the recoding, the order of the information contained in the individual symbols within the description data record of the individual protocol lines (3a, 3b, 3c) is maintained, preferably the number of symbols used to describe the content is reduced,
g) wherein the individual lines (5a, 5b, 5c) of the recoded protocol file (5) are analysed in respect of their similarity and are combined on the basis of their similarity to form groups (6a, 6b, 6c),
h) wherein a search is performed for groups (6a, 6b, 6c) having a small number of lines (5a, 5b, 5c), in particular having just a single line (5a, 5b, 5c), and
i) if such lines (5a, 5b, 5c) are present, an abnormal condition in the computer network (1) is identified.

2. A method for detection of abnormal conditions, in particular caused by manipulation, in a computer network (1) which comprises a plurality of computers (1a, 1b, 1c),
a) wherein protocols are created by the computers (1a, 1b, 1c) of the computer network (1) or by processes (2a, 2b, 2c) run on these computers (1a, 1b, 1c),
b) wherein, when predefined events occur, a protocol data record in the form of a protocol line (3a, 3b, 3c) is created by the computers (1a, 1b, 1c) or the processes (2a, 2b, 2c) for each of these events and consists of a timestamp (31a, 31b ,31c) and a description data record (32a, 32b, 32c) of the particular protocolled event,
c) wherein the protocol lines (3a, 3b, 3c) created by the computers (1a, 1b, 1c) or processes (2a, 2b, 2c) are stored in a protocol file (4a, 4b, 4c) associated with the computer (1a, 1b, 1c) or process (2a, 2b, 2c),
d) wherein the protocol lines (3a, 3b, 3c) from the individual protocol files (4a, 4b, 4c) are homogenised in that they are written into a central protocol file (4) in a uniform format, in particular in lines with a uniform timestamp format and chronologically ordered based on the timestamp (31a, 31b, 31c),
e) wherein different central protocol files (41, 42) are created for different predefined time regions, in particular of equal length, based on the timestamps (31a, 31b, 31c),
f) wherein a recoded protocol file (51, 52, 53) is created for each central protocol file (41, 42) in that symbols or symbol chains of the central protocol file (41, 42) following one another in lines are transferred into symbols or symbol chains of the recoded protocol files (51, 52) following one another on account of the same, predefined, in particular lossy coding stipulation (f),
g) wherein in particular within the scope of the recoding, in particular the order of the information contained in the individual symbols within the individual protocol lines (3a, 3b, 3c) is maintained, preferably the number of symbols used to describe the content is reduced,
h) wherein the individual lines (5a, 5b, 5c) of the recoded protocol files (51, 52) are analysed, in particular separately, in respect of their similarity and are combined on the basis of their similarity to form groups (61a, 61b, 62a, 62b, 62c),
i) wherein a group (61a, 61b, 62a, 62b, 62c) of the chronologically previous recoded protocol file (51, 52) is determined for each of the individual groups (61a, 61b, 62a, 62b, 62c) of a recoded protocol file (51, 52), which group contains similar lines and the groups (61a, 61b, 62a, 62b, 62c) are associated with one another,
j) wherein the groups (61a, 61b, 62a, 62b, 62c) associated with one another of two chronologically successive recoded protocol files (51, 52) are then compared with one another, and
k) an abnormal condition is determined
- if individual groups (61a, 61b, 62a, 62b, 62c) occur only for one of the protocol files, or
- if the difference in the number of lines contained in groups (61a, 61b, 62a, 62b, 62c) associated with one another exceeds a predefined threshold value.

3. The method according to claim 1 or 2, **characterised in that**, following the grouping of the protocol lines based on a predefined central protocol file (4; 41, 42) during the running operation of the computer network, new protocol lines (3a, 3b, 3c) are obtained from the computers (1a, 1b, 1c) or processes (2a, 2b, 2c),
- wherein, for each of the protocol lines (3a, 3b, 3c) thus obtained, symbols or symbol chains of the protocol file following on from one another are transformed into symbols or symbol chains of a recoded protocol line (5a, 5b, 5c) following on from one another on account of the used coding specification,
- wherein it is examined whether the recoded protocol line (5a, 5b, 5c) can be associated with one of the groups (6a, 6b, 6c; 61a, 61b; 62a, 62b, 62c) already created, and
- if this is not the case an abnormal condition is determined.

4. The method according to any one of the preceding claims, **characterised in that** the grouping method is based on sequence alignment, wherein, in order to determine how similar or dissimilar two recoded protocol lines (5a, 5b, 5c) of the recoded protocol files (5; 51, 52) are, the sequence alignment of these recoded protocol lines is calculated, wherein, in order to numerically define the similarity, the Levenshtein distance of the two considered recoded protocol lines (5a, 5b, 5c) is calculated, in particular based on the sequence alignment thereof, and then is standardised by the length of the sequence alignment and in this way the similarity measures of the recoded protocol lines (5a, 5b, 5c) lie preferably on a scale of from 0 to 1, wherein in particular two recoded protocol lines (5a, 5b, 5c) are considered to be similar if the similarity measure of the two recoded protocol lines (5a, 5b, 5c) exceeds a predefined threshold value.

5. The method according to any one of the preceding claims, **characterised in that**, during the recoding of the protocol lines (3a, 3b, 3c), individual part symbol chains of the protocol lines (3a, 3b, 3c) which contain information, in particular IP addresses and usernames, for the relevant computer (1a, 1b, 1c) or the user of the computer (1a, 1b, 1c) are selected in accordance with predefined criteria and are written in anonymised and pseudonymised form into the recoded protocol file (5; 51, 52), whilst the other part symbol chains are written into the recoded protocol file (5; 51, 52) unchanged on the basis of the coding specification.

6. The method according to any one of the preceding claims, **characterised in that** the coding specification (f) is selected in such a way that certain part symbol chains that satisfy predefined criteria, in particular occur at a frequency undershooting a threshold value, are transformed on the basis of the coding specification (f) without information loss, whilst the other text parts are transformed lossy.

7. The method according to any one of the preceding claims, **characterised in that** symbol chains or part symbol chains which occur in the protocol files (4a, 4b, 4c) at a frequency exceeding a threshold value are identified and are rejected by the coding specification (f) or are transformed lossy, whilst the other text parts are not transformed lossy.

8. The method according to any one of the preceding claims, **characterised in that** only the description data records of the individual protocol lines (3a, 3b, 3c) are recoded, wherein each recoded protocol line (5a, 5b, 5c) is created **in that** each protocol line (3a, 3b, 3c) is indexed with a number which, amongst other things, contains the timestamp (31a, 31b, 31c) and in particular enables the unique reconversion into the protocol line (3a, 3b, 3c) from which the recoded protocol line (5a, 5b, 5c) was created, wherein only the recoded description data record of a recoded protocol line (5a, 5b, 5c) is used for the grouping.

9. The method according to any one of the preceding claims, **characterised in that** the coding specification (f) is selected in such a way that individual symbols or symbol chains which are described in particular by symbols readable in plain text, preferably 96, are transformed in each case into a symbol of a target alphabet, preferably with the exception of the part symbol chains mentioned in claims 6 and 7, wherein the target alphabet preferably comprises no more than 20 different symbols and/or less than 1/4 of the different symbols occurring in the central protocol file (4; 41, 42) and thus in particular signifies a data reduction, which leads to an acceleration of the grouping method.

10. The method according to any one of the preceding claims, **characterised in that** each of the lines (3a, 3b, 3c) of the protocol file (4a, 4b, 4c) is associated with the corresponding recoded line (5a, 5b, 5c) of the recoded protocol file (5; 51, 52) which was created by application of the coding specification to the corresponding line (3a, 3b, 3c) of the protocol file (4a, 4b, 4c), and **in that** the recoded lines (5a, 5b, 5c) of the recoded protocol file (5; 51, 52)
- that are contained in groups (6a, 6b, 6c; 61a, 61b; 62a, 62b, 62c) with only one recoded line (5a, 5b, 5c) or a small number of recoded lines (5a, 5b, 5c), and/or
- that are contained in groups (62c) which could not be associated with any groups (61a, 61b) of the previous recoded protocol file (51, 52), and/or
- that are contained in groups (61a, 61b; 62a, 62b, 62c) in which the (value) difference between the number of recoded lines (5a, 5b, 5c) contained in the particular group (61a, 61b; 62a, 62b, 62c) and the number of recoded lines (5a, 5b, 5c) contained in an associated group (61a, 61b; 62a, 62b, 62c) exceeds a predefined threshold value, are identified,
and **in that** the lines (3a, 3b, 3c) thus identified of the protocol file (4a, 4b, 4c) or of the central protocol file (4; 41, 42) are marked as indicator of an abnormal condition, to which the recoded lines (5a, 5b, 5c) identified in this way of the recoded protocol file (5; 51, 52) were allocated.

11. A data carrier on which a program for executing a method according to any one of claims 1 to 10 is saved.

## Revendications

1. Procédé de détection d'états anormaux, provoqués notamment par manipulation, dans un réseau d'ordinateurs (1) comprenant plusieurs ordinateurs (1a, 1b, 1c),
a) des protocoles étant créés par les ordinateurs respectifs (1a, 1b, 1c) du réseau d'ordinateurs (1) ou par les processus (2a, 2b, 2c) se déroulant sur lesdits ordinateurs (1a, 1b, 1c),
b) lesdits ordinateurs (1a, 1b, 1c) ou lesdits processus (2a, 2b, 2c) créant, quand surviennent des événements donnés, une fiche numérique de protocole sous forme d'une ligne de protocole (3a, 3b, 3c) pour chacun de ces événements, ladite ligne comprenant un horodatage (31a, 31b, 31c) ainsi qu'une fiche numérique descriptive (32a, 32b, 32c) de l'événement respectif objet du protocole,
c) lesdites lignes de protocole (3a, 3b, 3c) créées par les ordinateurs (1a, 1b, 1c) ou par les processus (2a, 2b, 2c) étant enregistrées dans un fichier protocole (4a, 4b, 4c) associé à l'ordinateur (1a, 1b, 1c) ou au processus (2a, 2b, 2c),
d) lesdites lignes de protocole (3a, 3b, 3c) issues des différents fichiers protocoles (4a, 4b, 4c) étant homogénéisées par une écriture dans un format uniforme, singulièrement un format uniforme d'horodatage, ligne par ligne de manière chronologique suivant l'horodatage (31a, 31b, 31c) dans un fichier protocole central (4),
e) un fichier protocole recodifié (5) du fichier protocole (4) central étant créé par le transfert des caractères ou chaînes de caractères se succédant ligne par ligne du fichier protocole (4) central en raison de la même règle de codage donnée (f), singulièrement présentant des pertes, dans des caractères ou chaînes de caractères successifs du fichier protocole (5) recodifié,
f) dans lequel, et singulièrement dans le cadre du recodage, l'ordre des informations contenues dans les différents caractères au sein de la fiche numérique descriptive des différentes lignes de protocole (3a, 3b, 3c) est maintenu, et de préférence le nombre des symboles employés pour la description du contenu est réduit,
g) les différentes lignes (5a, 5b, 5c) du fichier protocole (5) recodifié étant analysées en ce qui concerne leur similitude, et regroupées en groupes (6a, 6b, 6c) en raison de leur similitude,
h) les groupes (6a, 6b, 6c) avec un plus petit nombre de lignes (5a, 5b, 5c), et singulièrement avec une seule ligne (5a, 5b, 5c) uniquement étant recherchés et
i) au cas où de telles lignes (5a, 5b, 5c) existeraient, un état anormal serait identifié dans le réseau d'ordinateurs (1).

2. Procédé de détection d'états anormaux, provoqués notamment par manipulation, dans un réseau d'ordinateurs (1) comprenant plusieurs ordinateurs (1a, 1b, 1c),
a) des protocoles étant créés par les ordinateurs respectifs (1a, 1b, 1c) du réseau d'ordinateurs (1) ou par les processus (2a, 2b, 2c) se déroulant sur lesdits ordinateurs (1a, 1b, 1c),
b) lesdits ordinateurs (1a, 1b, 1c) ou lesdits processus (2a, 2b, 2c) créant, quand surviennent des événements donnés, une fiche numérique de protocole sous forme d'une ligne de protocole (3a, 3b, 3c) pour chacun de ces événements, ladite ligne comprenant un horodatage (31a, 31b, 31c) ainsi qu'une fiche numérique descriptive (32a, 32b, 32c) de l'événement respectif objet du protocole,
c) lesdites lignes de protocole (3a, 3b, 3c) créées par les ordinateurs (1a, 1b, 1c) ou par les processus (2a, 2b, 2c) étant enregistrées dans un fichier protocole (4a, 4b, 4c) associé à l'ordinateur (1a, 1b, 1c) ou au processus (2a, 2b, 2c),
d) lesdites lignes de protocole (3a, 3b, 3c) issues des différents fichiers protocoles (4a, 4b, 4c) étant homogénéisées par une écriture dans un format uniforme, singulièrement un format uniforme d'horodatage, ligne par ligne de manière chronologique suivant l'horodatage (31a, 31b, 31c) dans un fichier protocole central (4),
e) différents fichiers protocoles centraux (41, 42) étant créés pour différents domaines temporels donnés, singulièrement d'égale longueur, se basant sur les horodatages (31a, 31b, 31c),
f) un fichier protocole recodifié (51, 52, 53) étant créé pour chaque fichier protocole central (41, 42) par le transfert des caractères ou chaînes de caractères se succédant ligne par ligne du fichier protocole central (41, 42) en raison de la même règle de codage donnée (f), singulièrement présentant des pertes, dans des caractères ou chaînes de caractères successifs des fichiers protocoles recodifiés (51, 52),
g) dans lequel, et singulièrement dans le cadre du recodage, l'ordre des informations notamment contenues dans les différents caractères au sein des différentes lignes de protocole (3a, 3b, 3c) est maintenu, et de préférence le nombre des symboles employés pour la description du contenu est réduit,
h) les différentes lignes (5a, 5b, 5c) des fichiers protocoles recodifiés (51, 52) étant analysées, notamment séparément, en ce qui concerne leur similitude, et regroupées en groupes (61a, 61b, 62a, 62b, 62c) en raison de leur similitude,
i) un groupe (61a, 61b, 62a, 62b, 62c) du fichier protocole recodifié (51, 52) précédent dans le temps étant respectivement déterminé pour les différents groupes (61a, 61b, 62a, 62b, 62c) d'un fichier protocole recodifié (51, 52), ledit groupe contenant des lignes similaires, et les groupes (61a, 61b, 62a, 62b, 62c) étant mis en correspondance de telle sorte,
j) qu'ensuite, les groupes mis en correspondance (61a, 61b, 62a, 62b, 62c) de deux fichiers recodifiés (51, 52) soient comparés l'un à l'autre et
k) qu'un état anormal soit constaté
- si certains groupes (61a, 61b, 62a, 62b, 62c) n'apparaissent que pour un des fichiers protocoles ou
- si la différence du nombre des lignes contenues dans les groupes mis en correspondance (61a, 61b, 62a, 62b, 62c) dépasse un seuil donné.

3. Procédé selon la revendication 1 ou 2, **caractérisé en ce qu'**après le regroupement des lignes de protocole se basant sur un fichier protocole central donné (4, 41, 42) et pendant le fonctionnement en cours du réseau d'ordinateurs, de nouvelles lignes de protocole (3a, 3b, 3c) sont reçues des ordinateurs (1a, 1b, 1c) ou des processus (2a, 2b, 2c),
- dans lequel pour chacune des lignes de protocole (3a, 3b, 3c) ainsi reçues, des caractères ou chaînes de caractères successifs du fichier protocole sont respectivement transformés en caractères ou chaînes de caractères successifs d'une ligne de protocole recodifiée (5a, 5b, 5c) en raison de la règle de codage employée,
- et dans lequel il est analysé si la ligne de protocole recodifiée (5a, 5b, 5c) peut être affectée à un des groupes déjà créés (6a, 6b, 6c ; 61a, 61b ; 62a, 62b, 62c) et,
- si tel n'est pas le cas, un état anormal est constaté.

4. Procédé selon une des revendications précédentes, **caractérisé en ce que** la méthode de regroupement repose sur un alignement séquentiel, dans lequel, et afin de déterminer le degré de similitude ou de dissimilitude de deux lignes de protocole recodifiées (5a, 5b, 5c) des fichiers protocoles recodifiés (5; 51, 52), l'alignement séquentiel desdites lignes de protocole recodifiées est calculé, dans lequel, et afin de déterminer numériquement la similitude, la distance de Levenshtein des deux lignes de protocole recodifiées considérées (5a, 5b, 5c) est calculée, et notamment en se basant sur leur alignement séquentiel, et est ensuite normalisée par la longueur de l'alignement séquentiel et que de la sorte, les degrés de similitude des lignes de protocole recodifiées (5a, 5b, 5c) se trouveront de préférence sur une échelle de 0 à 1, dans lequel notamment deux lignes de protocole recodifiées (5a, 5b, 5c) seront alors considérées comme similaires si le degré de similitude des deux lignes de protocole recodifiées (5a, 5b, 5c) dépasse un seuil donné.

5. Procédé selon une des revendications précédentes, **caractérisé en ce que**, pendant la recodification des lignes de protocole (3a, 3b, 3c), certaines chaînes de caractères partielles des lignes de protocole (3a, 3b, 3c), et qui contiennent des informations relatives à l'ordinateur concerné (1a, 1b, 1c) ou à l'utilisateur de l'ordinateur (1a, 1b, 1c), singulièrement les adresses IP et les noms d'utilisateur, sont sélectionnées suivant des critères donnés et écrites sous forme anonymisée et pseudonymisée dans le fichier protocole recodifié (5 ; 51, 52), tandis que les chaînes de caractères partielles restantes sont écrites sous forme inchangée dans le fichier protocole recodifié (5 ; 51, 52) en se basant sur la règle de codification.

6. Procédé selon une des revendications précédentes, **caractérisé en ce que** la règle de codification (f) est choisie de telle sorte que certaines chaînes de caractères partielles, satisfaisant à des critères donnés, apparaissent notamment avec une fréquence n'atteignant pas un seuil, sont transformées sans perte d'information en raison de la règle de codage (f), tandis que les autres parties de texte sont transformées avec perte.

7. Procédé selon une des revendications précédentes, **caractérisé en ce que** les chaînes de caractères ou les chaînes de caractères partielles qui apparaissent dans les fichiers protocoles (4a, 4b, 4c) avec une fréquence dépassant un seuil, sont identifiées et sont rejetées par la règle de codage (f) ou transformées avec des pertes, tandis que les autres parties de texte ne sont pas transformées avec des pertes.

8. Procédé selon une des revendications précédentes, **caractérisé en ce que** seules les fiches numériques descriptives des différentes lignes de protocole (3a, 3b, 3c) sont recodées, chaque ligne de protocole recodée (5a, 5b, 5c) étant créée par indexation de chaque ligne de protocole (3a, 3b, 3c) avec un numéro, lequel comprend entre autres l'horodatage (31a, 31b, 31c) et qui permet notamment la reconversion univoque dans la ligne de protocole (3a, 3b, 3c) à partir de laquelle la ligne de protocole recodée (5a, 5b, 5c) a été créée, dans lequel seule la fiche numérique descriptive d'une ligne de protocole recodée (5a, 5b, 5c) est utilisée pour le regroupement.

9. Procédé selon une des revendications précédentes, **caractérisé en ce que** la règle de codage (f) est choisie de sorte que certains caractères ou chaînes de caractères qui sont décrits notamment par des caractères lisibles en langage clair, de préférence 96, sont transformés respectivement en un caractère d'un alphabet cible, à l'exception de préférence des chaînes de caractères partielles mentionnées dans les revendications 6 et 7, l'alphabet cible ne comptant pas plus de 20 symboles différents et/ou moins de 1/4 des différents symboles apparaissant dans le fichier protocole central (4; 41, 42), ce qui signifie notamment une réduction des données qui conduit à une accélération du processus de regroupement.

10. Procédé selon une des revendications précédentes, **caractérisé en ce qu'**à chacune des lignes (3a, 3b, 3c) du fichier protocole (4a, 4b, 4c) est affectée la ligne recodée respective (5a, 5b, 5c) du fichier protocole recodé (5 ; 51, 52), qui a été créée par application de la règle de codage à la ligne respective (3a, 3b, 3c) du fichier protocole (4a, 4b, 4c), et **en ce que** les lignes recodées (5a, 5b, 5c) du fichier protocole recodé (5 ; 51, 52) sont identifiées,
- qui sont contenues dans les groupes (6a, 6b, 6c ; 61a, 61b ; 62a, 62b, 62c) avec seulement une ligne recodée (5a, 5b, 5c) ou avec un faible nombre de lignes recodées (5a, 5b, 5c), et/ou
- qui sont contenues dans les groupes (62c) auxquels aucun groupe (61a, 61b) du fichier protocole respectif précédemment recodé (51, 52) n'a pu être affecté, et/ou
- qui sont contenues dans les groupes (61a, 61b ; 62a, 62b, 62c) dans lesquels la différence (montant) du nombre de lignes recodées (5a, 5b, 5c) contenues dans le groupe respectif (61a, 61b ; 62a, 62b, 62c) par rapport au nombre de lignes recodées (5a, 5b, 5c) contenues dans un groupe mis en correspondance (61a, 61b ; 62a, 62b, 62c) dépasse un seuil donné,
et **en ce que** les lignes ainsi identifiées (3a, 3b, 3c) du fichier protocole (4a, 4b, 4c) ou du fichier protocole central (4 ; 41, 42) sont marquées comme indicateur d'un état anormal auxquelles les lignes recodées identifiées de la sorte (5a, 5b, 5c) du fichier protocole recodé (5 ; 51, 52) ont été attribuées.

11. Support de données sur lequel est mémorisé un programme pour la réalisation du procédé selon une des revendications 1 à 10.
